# EUROPÄISCHE PATENTSCHRIFT

(11) **EP 0 807 467 B1**
(45) Veröffentlichungstag und Bekanntmachung des Hinweises auf die Patenterteilung: **19.12.2001**
(21) Anmeldenummer: 97112702.2
(22) Anmeldetag: 31.08.1994
(51) Int. Cl.: B01L 7/00, B01L 9/06, C12Q 1/68

(54) **Vorrichtung zur automatischen Durchführung von Polymerase-Kettenreaktionen**
Device for automatically carrying out polymerase chain reactions
Dispositif destiné à la réalisation automatique de réactions en chaîne de polymérase

(30) Priorität: 10.09.1993 CH 271793
(43) Veröffentlichungstag der Anmeldung: 19.11.1997
(62) Teilanmeldung aus: 94113574.1
(73) Patentinhaber: F. HOFFMANN-LA ROCHE AG, 4070 Basel (CH)
(72) Erfinder: Moser, Rolf, 6354 Vitznau (CH); Birrer, Lukas, 6005 Luzern (CH)
(74) Vertreter: AMMANN PATENTANWAELTE AG BERN

(56) Entgegenhaltungen:
- EP-A- 0 488 769
- WO-A-92/20778
- DE-A- 3 024 210
- DE-U- 8 804 938

## Beschreibung

Die Erfindung betrifft eine Vorrichtung zur automatischen Durchführung von Polymerase-Kettenreaktionen in einer Vielzahl von Reaktionsbehältern, wobei jedes Reaktionsbehälter mit einem Deckel verschlossen ist und ein vorbestimmtes Volumen eines flüssigen Reaktionsgemisches enthält, welche Vorrichtung folgende Komponenten enthält:
a) einen Träger, der eine Anordnung von Kammern zur Aufnahme der Reaktionsbehälter hat, wobei jede Kammer dazu geeignet ist, den unteren Teil eines Reaktionsbehälters aufzunehmen, und wobei der Träger aus einem Material besteht, das eine hohe thermische Leitfähigkeit hat, und der eine obere Fläche, eine untere Fläche und eine zylindrische Aussenwand hat, wobei jede der Kammern des Trägers eine Oeffnung hat, die in der oberen Fläche des Trägers liegt,
b) in den Kammern des Trägers angeordneten Reaktionsbehälter, die je mit einem Deckel verschlossen sind,
c) eine computergesteuerte Steuer- und Regeleinrichtung, und
d) durch die Steuer- und Regeleinrichtung gesteuerte Mittel zur zyklischen Aenderung der Temperatur des Trägers.

Die Erfindung betrifft insbesondere eine Vorrichtung dieser Art, die vorzugsweise als integrierter Bestandteil eines automatischen Analysengerätes zur Durchführung der Polymerase-Kettenreaction ("Polymerase-Chain-Reaction") geeignet ist.

Eine Vorrichtung der oben erwähnten Art ist in der EP-A- 0 488 769 A2 beschrieben.

Eine Vorrichtung der oben erwähnten Art ist auch in der EP-A- 0 236 069 A2 beschrieben, in der ausserdem darauf hingewiesen wird, dass Mittel zur zyklischen Aenderung der Temperatur eines Trägers der oben erwähnten Art ein Peltier-Element enthalten können.

Vorrichtungen der eingangs genannten Art werden "Thermal cycler" genannt. Diese Bezeichnung wird in der nachstehenden Beschreibung verwendet.

Die in der EP-A- 0 488 769 A2 und in der EP-A- 0 236 069 A2 beschriebenen Vorrichtungen haben den Nachteil, dass durch die Temperatur-Aenderungen und die auf die Reaktionsbehälter wirkenden Druck die Aussenwände der Reaktionsbehälter an den Wänden der Kammer des Trägers haften. Die dadurch erwirkte kraftschlüssige Verbindung erschwert das Entfernen der Reaktionsbehälter aus dem Trägers.

Es ist zwar aus der DE-A-3024210 A1 ein Metallblockthermostat bekannt, bei dem Reaktionsgefässe mittels einer Trägerplatte gleichzeitig in Bohrungen ein- bzw. ausführbar sind. Nachteilig dabei ist, dass dafür zusätzliche Hubtriebe zum Transport der Trägerplatte erforderlich sind, was die Herstellungskosten erheblich erhöht.

Der Erfindung liegt daher die Aufgabe zugrunde eine Vorrichtung der eingangs erwähnten Art zur Verfügung zu stellen, mit welcher die oben erwähnten Nachteile behoben werden können.

Diese Aufgabe wird erfindungsgemäss mit einer Vorrichtung gemäss Patentanspruch 1 gelöst.

Die erfindungsgemässe Vorrichtung erleichtert die Entfernung der Reaktionsbehälter aus den Kammern des Trägers nach Durchführung der Polymerase-Kettenreaktionen.

Ein weiterer Vorteil der erfindungsgemässen Vorrichtung ist, dass sie den oben erwähnten Nachteil der bekannten Vorrichtungen dieser Art auf möglichst einfache Weise und mit geringem Aufwand behebt.

### Beschreibung eines Ausführungsbeispiels

Ein Ausführungsbeispiel der Erfindung wird im folgenden anhand der beiliegenden Zeichnungen beschrieben. Es zeigen:
- Fig. 1: einen aus einem Analysengerät herausgenommenen Thermalcycler-Teil 2, der Thermalcycler 18 und 19 enthält, wobei der Thermalcycler 18 geöffnet und einen daraus entnommenen Proberöhrchenring 23 gezeigt wird,
- Fig.2: einen Schnitt durch die Linie II-II in Fig. 1, wobei der Thermalcycler 18 geschlossen ist,
- Fig. 3: eine perspektivische Ansicht des Thermalcyclers 18 gemäss Fig. 1, welcher durch eine Aushebevorrichtung 53 ergänzt ist,
- Fig. 4: einen gegenüber Fig. 2 vergrösserten Schnitt durch den Thermalcycler im geschlossenen Zustand,
- Fig. 5: einen Thermalcycler gemäss Fig. 4 im geöffneten Zustand,
- Fig. 6: eine schematische Darstellung einer "Master-Slave"-Steuerung zur Regelung und Ueberwachung der Betriebsparameter eines Thermalcyclers,
- Fig. 7: ein Temperatur-Zeit-Diagramm eines im Master-Prozessor gespeicherten Temperaturverlaufes bzw. die daraus resultierenden Temperaturen des Thermoblocks und der Probe.

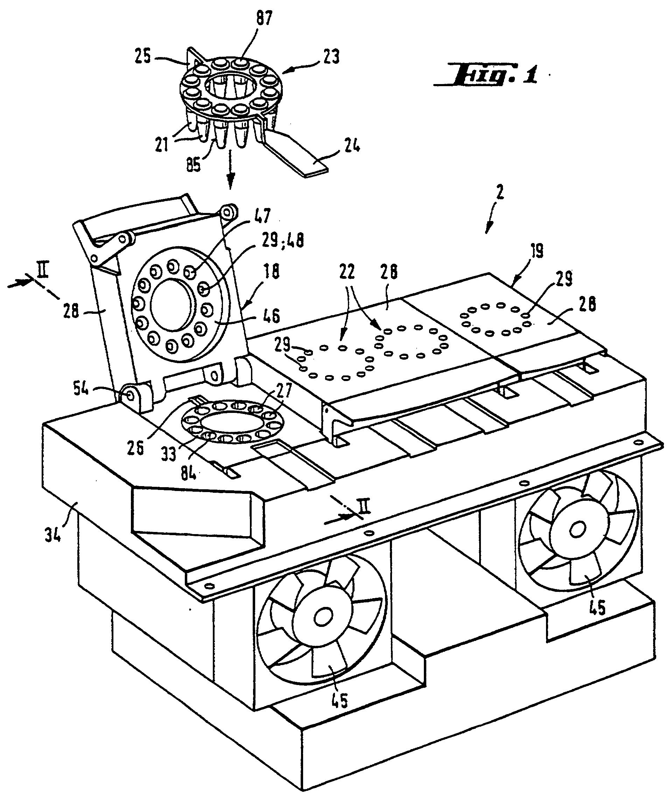

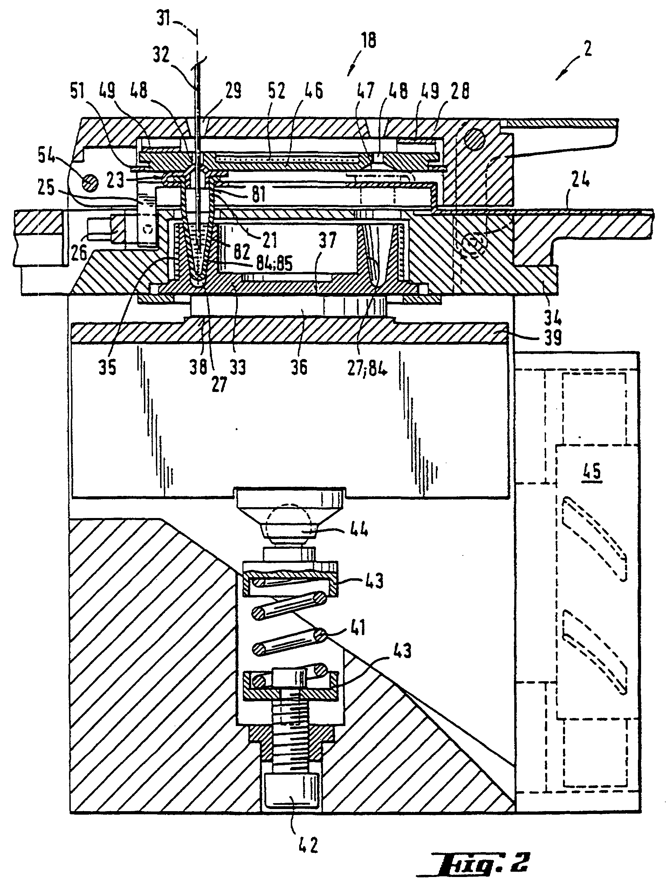

Der in den Figuren 1 und 2 dargestellte Thermalcycler-Teil 2 als solche fällt nicht unter den Patentanspruch 1.

### Thermalcycler

In der nachstehenden Beschreibung wird mit Thermalcycler eine Vorrichtung bezeichnet, die zur automatischen Durchführung von Temperaturzyklen in wenigstens einem mit einem Deckel geschlossenen Proberöhrchen 21 dient, das ein vorbestimmtes Volumens eines flüssigen Reaktionsgemisches enthält.

Nachstehend wird ein Thermalcycler beschrieben, der vorzugsweise als Bestandteil eines automatischen Analysengerätes zur Durchführung der Polymerase-Kettenreaction geeignet ist. Das Analysengerät ist beispielsweise zur Durchführung von Immunoassays ausgelegt.

In Fig. 1 ist ein Thermalcycler-Teil 2 aus einem Analysengerät 1 ausgebaut dargestellt. Dieser Thermalcycler-Teil 2 enthält z.B. zwei identische Thermalcycler 18, 19 und eine Stand-by Position 22. Die nachstehende Beschreibung des Thermalcycler 18 gilt auch für den Thermalcycler 19.

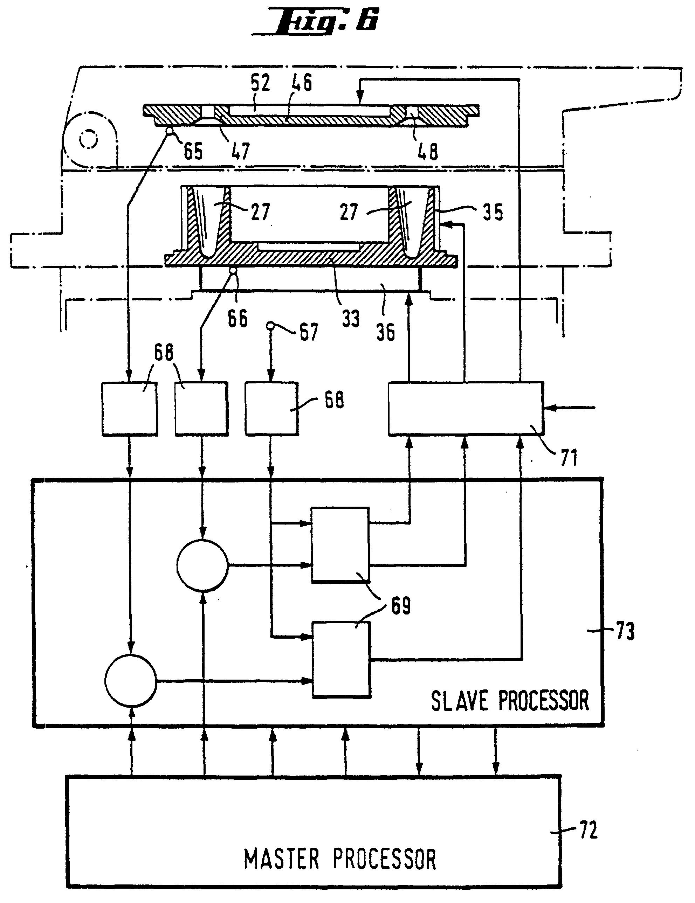

Der Thermalcycler 18 enthält folgende Komponenten :
a) einen Thermoblock 33, der als Träger der Proberöhrchen dient, und der eine ringförmige Anordnung von Ausnehmungen 27 hat, wobei jede Ausnehmung als Kammer zur Aufnahme des unteren Teils eines der Proberöhrchen 21 dient,
b) eine in Fig. 6 dargestellte computergesteuerte Steuer- und Regeleinrichtung, und
c) durch diese Steuer- und Regeleinrichtung gesteuerte Heiz- bzw. Kühlelemente als Mittel zur zyklischen Aenderung der Temperatur des Thermoblocks 33.

Der Thermoblock 33 besteht aus einem Material, das eine hohe thermische Leitfähigkeit hat. Der Thermoblock 33 ist vorzugsweise ein Körper aus Aluminium oder Silber. Der Thermoblock 33 hat eine obere Fläche, eine untere Fläche und eine zylindrische Aussenwand, wobei jede der Ausnehmungen 27 des Thermoblocks 33 eine Oeffnung hat, die in der oberen Fläche des Trägers liegt.

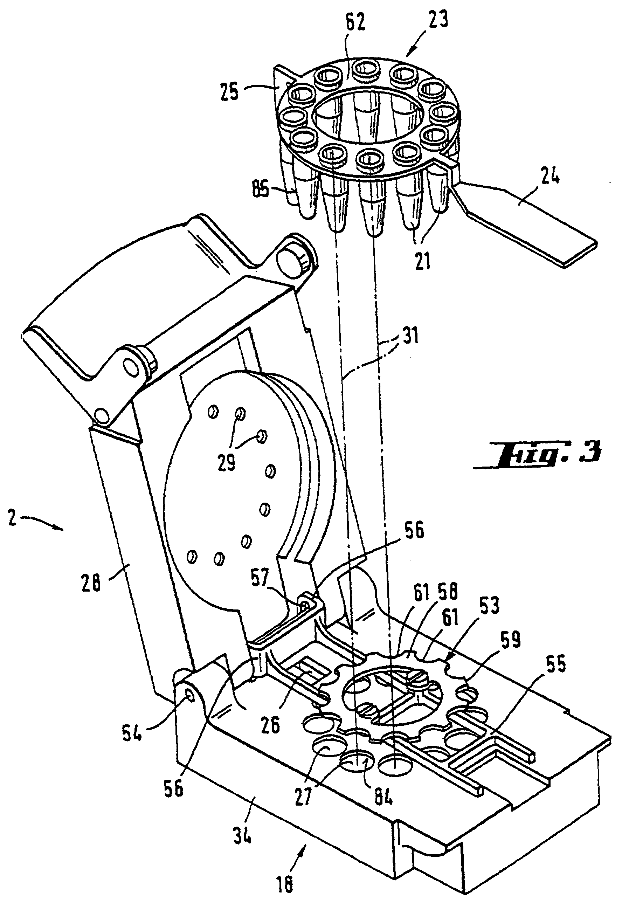

Wie in Figuren 1 und 3 dargestellt, sind z.B. zwölf Proberöhrchen 21 zu einem Proberöhrchenring 23 zusammengefasst. Die Proberöhrchen 21 sind im unteren Bereich konisch, im oberen Bereich zylindrisch geformt und durch einen Deckel 87 dicht verschlossen. Wie in Fig. 1 und 3 gut zu erkennen ist, kann eine derartige Proberöhrchenanordnung 23 in entsprechende Ausnehmungen 27 des Thermoblocks 33 des Thermalcyclers 18 eingesetzt werden.

### Zugriff zum Inhalt eines Proberöhrchens

Der Thermalcyclers 18 hat einen klappbaren Deckel 28, der pro Ausnehmung 27 des Thermoblocks 33 eine Oeffnung 29 aufweist, die ein Durchstechen des Verschlusses 87 des in der Ausnehmung eingesetzten Proberöhrchens 21 mit einer Pipettiernadel ermöglicht. Wie aus Fig. 2 ersichtlich, fluchtet bei geschlossener Stellung des Klappdeckels 28 jede der Oeffnungen 29 mit der Längsachse 31 des entsprechenden Proberöhrchens 21.

Die Oeffnungen 29 des Klappdeckels 28 ermöglichen den Zugriff zum Inhalt jedes Proberöhrchens bei geschlossenem Klappdeckel 28. Dafür wird die Pipettiernadel 32 einer (in Figur 3 nicht dargestellten) Pipettiereinrichtung durch eine der Oeffnungen 29 eingeführt, der Deckel 87 des Proberöhrchens 21 mit der Pipettiernadel 32 durchgestochen und anschliessend ein bestimmtes Volumen der im Proberöhrchen enthaltenen Flüssigkeit abgesaugt.

### Wärmeübertragung zwischen Thermoblock und Proberöhrchen

Es ist aus Fig. 2 ersichtlich, dass die Ausnehmungen 27 im Thermoblock 33 an den konischen Bereich der Proberöhrchen 21 angepasst sind, sodass die Umfangswandung des Proberöhrchens 21 zuverlässig an die Innenwandung der Ausnehmung 27, zwecks bester Wärmeübertragung, zur Anlage kommen kann. Um die thermische Reaktionsgeschwindigkeit, Präzision und Homogenität zu erhöhen, ist der Thermoblock 33 möglichst wärmeisoliert in einem Gehäuse 34 gehaltert und weist wenig Masse bei guter thermischer Leitfähigkeit auf.

### Heizelement im klappbaren Deckel des Thermalcyclers

Der Deckel 28 enthält vorzugsweise ein Heizelement , z.B. eine elektrische Widerstandsheizung 52, die zum Beheizen der verschlossenen, im Thermoblock 33 angeordneten Proberöhrchen dient.

In einer ersten Ausführungsform des Thermalcyclers wird die elektrische Widerstandsheizung 52 in Kombination mit einem nachstehend beschriebenen Peltier-Element 36 verwendet, um ein gewünschtes Temperaturprofil (Temperaturverlauf über ein bestimmtes Zeitintervall) im Thermoblock 33 zu erzielen. In dieser Ausführungsform wird das Peltier-Element je nach der zu erreichenden Temperatur innerhalb eines Temperaturprofils als Kühl- oder als Heizelement verwendet.

Die Zusammenwirkung der elektrischen Widerstandsheizung 52 mit dem Peltier-Element 36 ermöglicht, die erforderliche Schnelligkeit der Temperaturänderungen des Thermoblocks 33 sowie die erforderliche Präzision und Homogenität der Temperaturverteilung zu erreichen. Durch die Wirkung der Widerstandsheizung 52 wird ausserdem eine etwaige Kondensatbildung im Deckelbereich des Proberöhrchens 21 vermieden.

### Verschliess- und Anpresseinrichtung des Klappdeckels des Thermalcyclers

Der Klappdeckel 28 enthält vorzugsweise eine Verschliess- und Anpresseinrichtung zum Festhalten der verschlossenen, im Thermoblock 33 angeordneten Proberöhrchen 21. Hierfür weist der Klappdeckel 28 eine federnd gehaltene Andruckplatte 46 auf, welche jedes Proberöhrchen 21 mit einer definierten Kraft in die Ausnehmungen 27 des Thermoblocks 33 hineindrückt. Ausnehmungen 47 zur Aufnahme der kalottenförmigen Deckel 87 der Proberöhrchen 21 sowie Durchstichöffnungen 48 für die Pipettiernadel 32 sind koaxial zu den Proberöhrchen 21 in der Andruckplatte 46 vorgesehen. Als Federelement kann eine Wellscheibe 49 vorgesehen sein. Durch einen Sicherungsring 51 ist die Andruckplatte 46 bei geöffnetem Klappdeckel 28 gegen Herausfallen gesichert.

Die oben erwähnte Widerstandsheizung 52 ist vorzugsweise in der federnden Andruckplatte 46 enthalten.

### Peltier-Element als Kühl- oder Heizelement

Wie in Fig. 2 dargestellt, enthält ein Thermalcycler 18 vorzugsweise wenigstens ein Peltier-Element 36 als Teil der im Thermalcycler 18 vorgesehenen Mittel zur zyklischen Aenderung der Temperatur des Thermoblocks 33. Das Peltier-Element 36 ist mit seiner einen Wärmeübergangsfläche 37 grossflächig mit der unteren Fläche des Thermoblocks 33 und mit seiner anderen Wärmeübergangsfläche 38 grossflächig an einen Kühlkörper 39 zur Wärmeabfuhr thermisch in Kontakt gebracht. Der Kühlkörper 39 ist vorzugsweise aus Aluminium oder Kupfer. Zur Wärmeabfuhr ist ein schaltbarer Ventilator 45 vorgesehen.

Das in Fig. 2 schematisch dargestellte Peltier-Element 36 ist vorzugsweise eine Anordnung solcher Elemente.

In der oben erwähnten ersten Ausführungsform des Thermalcyclers wird das Peltier-Element 36 als Kühl- oder als Heizelement verwendet. Diese Betriebsweise des Peltier-Elementes 36 und seine Zusammenwirkung mit der elektrischen Widerstandsheizung 52 ermöglicht, die erforderliche Temperatur des Thermoblocks innerhalb eines Temperaturprofils zu erreichen.

Zur Verlängerung der Lebensdauer des Peltier-Elementes 36 ist dieser vor thermodynamisch begründeten mechanischen Spannungsspitzen vorzugsweise dadurch geschützt, dass das Peltier-Element 36 durch eine zentrale, federvorgespannte Befestigung gegen den Thermoblock 33 gepresst gehalten wird. Hierfür wird das Peltier-Element elastisch zwischen den Wärmeübertragungsflächen des Thermoblocks 33 und des Kühlkörpers 39 eingespannt. Dafür wird der Kühlkörper 39 z.B. mittels einer Druckfeder 41 mit seiner Kontaktfläche gegen das Peltier-Element 36 gedrückt. Die Federspannung kann über eine Einstellschraube 42, Federteller 43 und ein Kugelgelenk 44 eingestellt werden, welches die Freiheitsgrade des Kühlkörpers 39 noch weiter erhöht.

### Peltier-Element ausschliesslich als Kühlelement

In einer Variante des hier beschriebenen Ausführungsbeispiels wird das Peltier-Elementes 36 ausschliesslich als kälteerzeugendes Element, d.h. nur als Kühlelement verwendet. Dadurch wird eine Verlängerung der Lebensdauer des Peltier-Elementes erreicht.

### Zusätzliches Heizelement um den Thermoblock

In einer zweiten Ausführungsform des Thermalcyclers enthält dieser vorzugsweise zusätzlich eine elektrische Widerstandsheizung 35, die um den Thermoblock 33 und entlang des Umfangs seiner zylindrischen, äusseren Wand angeordnet ist. Bei Verwendung dieses zusätzliches Heizelementes im Thermalcycler wird das Peltier-Element 36 nur zum Kühlen verwendet. Dies bringt den Vorteil einer Entlastung des Peltier-Elements von thermisch bedingtem mechanischem Stress und trägt dadurch dazu bei die Lebensdauer des Peltier-Elements im Thermalcycler zu verlängern.

### Aushebevorrichtung

Durch die Temperatur-Aenderungen und der Wirkung der Feder 49 haften die konischen Bereiche der Proberöhrchen 21 an den Wänden der Ausnehmungen 27 des Thermoblocks 33. Die dadurch erwirkte kraftschlüssige Verbindung erschwert das Entfernen der Proberöhrchen 21 aus dem Thermalcycler 2. Aus diesem Grunde wurde in der Ausführungsform gemäss Fig. 3 bis 5 eine Aushebevorrichtung 53 vorgeschlagen, welche die Entnahme des Proberöhrchenringes 23 aus dem Thermoblock 33 erheblich erleichtert.

Wie aus Figuren 3-5 ersichtlich, enthält die Aushebevorrichtung 53 eine Wippe 55, die als Auswurfhebel dient. Die Wippe 55 ist an einem Ende mit einem Scharnier des klappbaren Deckels 28 verbunden. Die Wippe 55 ist am anderen Ende frei. Die Aushebevorrichtung 53 enthält ferner eine Auswurfscheibe 58, die mit der Rotationssymmetrieachse des Thermoblocks 33 konzentrisch ist, auf dem die Wippe 55 angeordnet ist. Die Auswurfscheibe 58 hat an der Peripherie eine Anordnung von Ausnehmungen 61, die zur Entnahme des Proberöhrchenringes 23 aus den Ausnehmungen 27 des Thermoblocks 33 dienen.

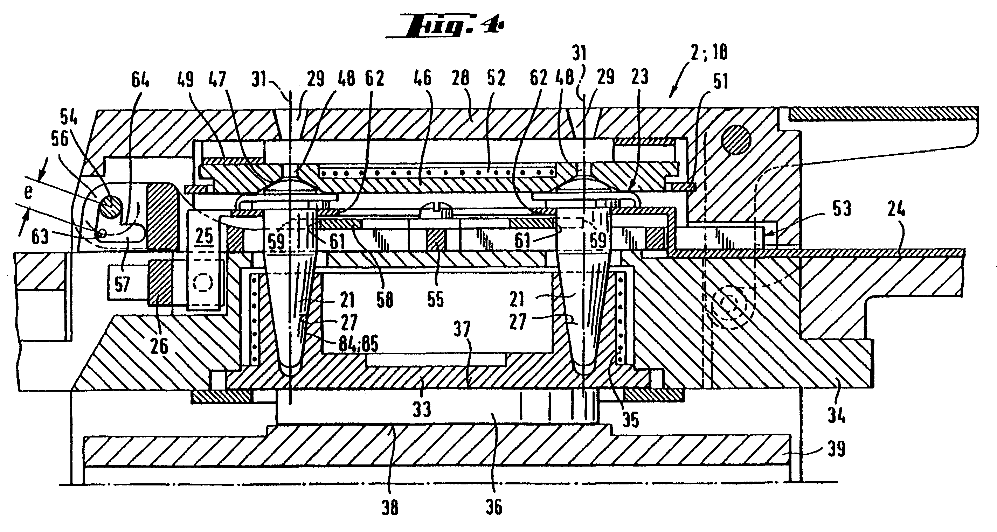

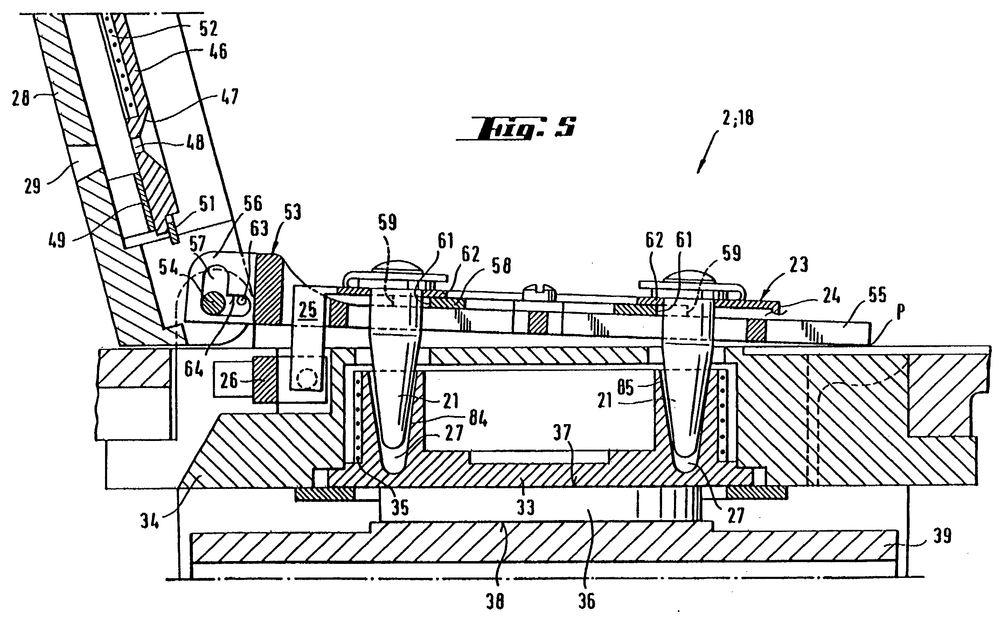

Wie aus Fig. 3 ersichtlich, wird die Wippe 55 auf der Drehachse 54 des Klappdeckels 28 geführt. Drehachsenseitig weist die Wippe 55 zwei Laschen 56 mit Ausnehmungen 57 auf, in welche die Drehachse 54 eingreift. Die Auswurfscheibe ist auf die Wippe 55 aufgeschraubt. Die Auswurfscheibe 58 weist an seinem peripheren Rand 59 halbkreisförmige Ausnehmungen 61 auf, welche projektionsgenau mit den Ausnehmungen 27 im Thermoblock 33, bzw. den zylindrischen Bereichen der Proberöhrchen 21 fluchten, welche in die Ausnehmungen 27 eingesetzt sind (Fig. 5). Der periphere Rand 59 der Auswurfscheibe 58 untergreift somit den inneren flanschartigen Bereich 62 des Proberöhrchenringes 23 bzw. die Flansche der Proberöhrchen 21. Die Gestalt und Funktion der Ausnehmung 57 in den Laschen 56 der Wippe 55 im Zusammenhang mit der Drehachse 54 des Klappdeckels 28 sowie eines am Klappdeckel 28 in einem Abstand e angebrachten Steuerstiftes 63, welcher ebenso in die Ausnehmung 57 eingreift, ist aus Figuren 4 und 5 ersichtlich. Bei geschlossenem Klappdeckel 28 ist die Aushebevorrichtung 53 noch funktionslos. Beim Öffnen des Klappdeckels 28 gerät der Stift 63 ab einem gewissen Oeffnungswinkel in Kontakt mit einer Steuerfläche 64 der Ausnehmung 57 und bewirkt ein Verschwenken der Wippe 55 um den Punkt P, was ein Ausheben der Probenbehälter 21 zur Folge hat. Durch die Kippbewegung der Wippe 55 um den Punkt P bzw. durch die zunehmende Schrägstellung der Auswurfscheibe 58 wird bewirkt, dass sich die den einzelnen Proberöhrchen 21 zugeordneten Losbrechkräfte zeitlich versetzt manifestieren, so dass die Proberöhrchen 21 nach und nach aus ihren Ausnehmungen 27 gelöst werden. Der Kraftaufwand und die Materialbeanspruchung wird dadurch auf niedrigem Niveau gehalten und der Bedienungskomfort erhöht.

### Steuerung und Regelung des Thermalcyclers

Eine Steuer- und Regeleinrichtung des Thermalcyclers 18 über Master-Slave-Prozessoren 72, 73 ist in Fig. 6 schematisch dargestellt.

Die Temperatur der Andruckplatte 46 des Klappdeckels 28, des Thermoblocks 33 und der Umgebung wird mittels Temperaturfühler 65, 66, 67 erfasst und über ein Temperatur-Interface 68 dem Slave-Prozessor 73 zugeführt. Im Master-Prozessor 72 (Schnittstelle zum Benutzer) werden unter anderem die Temperatursollwerte, die Zeitsollwerte, die Anzahl der Temperaturzyklen und die Geschwindigkeit der Heiz- und Kühlvorgänge eingegeben.

Es können bereits vorbestimmte, gespeicherte Temperatur/Zeitprofile gewählt und abgefahren werden. Die Eingabe erfolgt über die Tastatur 16 oder eine andere Schnittstelle. Diese Daten werden dem Slave-Prozessor 73 zugeführt, welcher über Regler 69 einen Leistungssteller 71 ansteuert, welcher wiederum die Energieversorgung der Heizelemente 35, 52 und des Peltier-Elements 36 regelt. Die Rückmeldungen (Ist-Werte) werden über den Slave-Prozessor 73 dem Master-Prozessor 72 zugeführt und dort verarbeitet bzw. dem Benutzer angezeigt. Auf diese Weise wird der Benutzer über die momentane Probentemperatur, die bereits erreichten Temperaturen mit Zeitangabe und die noch zu erreichenden Temperaturen mit Zeitangabe informiert.

Der Betriebszustand des Systems wird ständig überwacht und protokolliert. Fehler, die nicht vom System selbst behoben werden können, bewirken eine automatische Abschaltung oder Fehlermeldung.

Die Temperatur der Probe wird aus der Temperatur des Thermoblocks 33 rechnerisch ermittelt. Dazu wird die Uebertragungsfunktion vom Probenraum zur Probe im Proberöhrchen 21 bestimmt. Diese Funktion ist im wesentlichen ein Tiefpass mit Totzeit.

Anhand geeigneter Regelalgorythmen (abgetastete Systeme) wird jeweils die Stellgrösse berechnet, die nötig ist, um die Temperatur der Probe der vorgegebenen Sollwerttemperatur nachzuführen. Diese Berechnungen werden mit einem Signalprozessor durchgeführt. Die berechnete Stellgrösse wird in Form einer Pulsweite dem Leistungssteller 71 zugeführt. Der Leistungssteller 71 ist z.B. ein Leistungs-FET mit einer dazu passenden Schutz- und Entstörschaltung.

Die oben beschriebene Steuerung und Regelung ermöglicht den Einsatz des Thermalcyclers um Proben in einem im Thermalcyclers eingesetzten Probenröhrchenring nach bestimmten Temperaturprofilen zu heizen und zu kühlen. Die Temperaturprofile sind definiert durch Plateau-Temperaturen definierter Dauer, und der Gradient, der die Zeit definiert, bei der eine Plateau-Temperatur erreicht sein muss. Bedingung ist, dass alle Proben im Thermalcycler zur gleichen Zeit die gleichen Temperaturen haben.

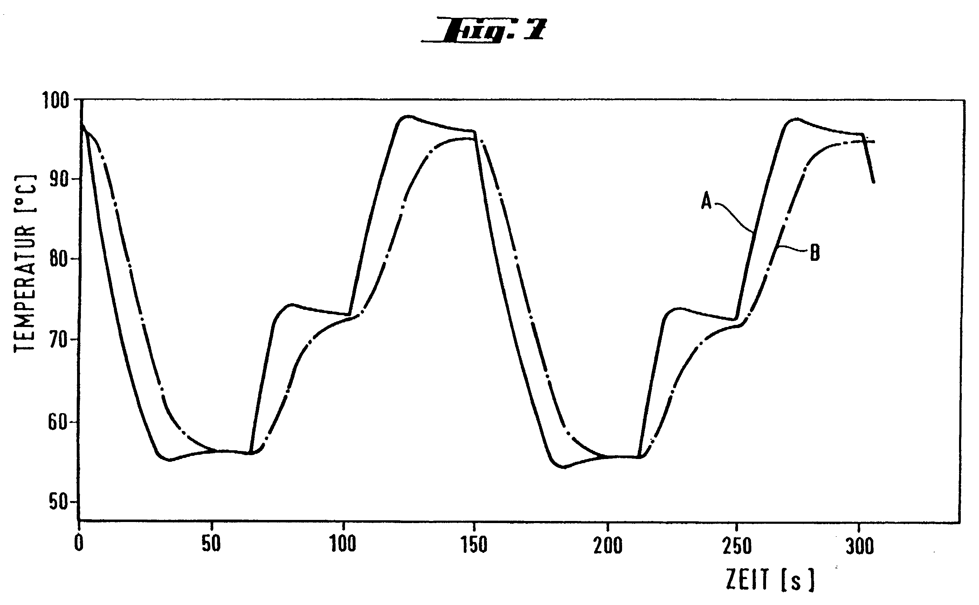

In Fig. 7 sind beispielsweise Temperaturverläufe aus einem Zyklusprozess aufgezeigt. Kurve A zeigt den Temperaturverlauf am Thermoblock 33, die Kurve B zeigt den Temperaturverlauf der Flüssigkeit im Reaktionsbehälter 21. Mit dem Thermalcycler können Temperaturen zwischen 40 und 98 Grad Celsius eingestellt werden. Typischerweise liegen die untere Temperaturen zwischen 50 und 60 Grad Celsius und die oberen Temperaturen zwischen 90 und 96 Grad Celsius. Wenn die mittlere Temperatur benutzt wird, liegt sie um 72 Grad Celsius. Die mit dem Thermalcycler erzielte Heiz-/Kühl-Geschwindigkeit beträgt 1 Grad Celsius pro Sekunde. Ein typisches Zyklus hat eine Dauer von 120 Sekunden. Wenn die entsprechende Temperaturen länger als 10 Sekunden gehalten werden müssen, verlängert sich die Zyklusdauer entsprechend.

## Patentansprüche

1. Vorrichtung zur automatischen Durchführung von Polymerase-Kettenreaktionen in einer Vielzahl von Reaktionsbehältern, wobei jeder Reaktionsbehälter mit einem Deckel verschlossen ist und ein vorbestimmtes Volumen eines flüssigen Reaktionsgemisches enthält, welche Vorrichtung folgende Komponenten enthält:
a) einen Träger (33), der eine Anordnung von Kammern (27) zur Aufnahme der Reaktionsbehälter hat (21), wobei jede Kammer dazu geeignet ist, den unteren Teil eines Reaktionsbehälters aufzunehmen, und wobei der Träger (33) aus einem Material besteht, das eine hohe thermische Leitfähigkeit hat, und der eine obere Fläche, eine untere Fläche und eine zylindrische Aussenwand hat, wobei jede der Kammern (27) des Trägers (33) eine Öffnung hat, die in der oberen Fläche des Trägers liegt,
b) in den Kammern (27) des Trägers (33) angeordnete Reaktionsbehälter (21), die je mit einem Deckel (87) verschlossen sind,
c) eine computergesteuerte Steuer- und Regeleinrichtung, und
d) durch die Steuer- und Regeleinrichtung gesteuerte Mittel zur zyklischen Änderung der Temperatur des Trägers,
welche Vorrichtung **dadurch gekennzeichnet ist, dass**
(i) die Anordnung der Kammer (27) im Träger (33) ringförmig ist,
(ii) sie einen klappbaren Deckel (28) zum Festhalten der verschlossenen, im Träger (33) angeordneten Reaktionsbehälter (21) enthält , wobei dieser Deckel eine Drehachse (54) und einen Steuerstift (63) aufweist, der in einem Abstand von der Längsachse der Drehachse (54) angeordnet ist , und
(iii) sie eine Aushebevorrichtung zur Erleichterung der Entnahme der Reaktionsbehälter (21) aus den Kammern (27) im Träger (33) enthält, welche Aushebevorrichtung einen Auswurfhebel (55), der an einem Ende über Laschen (56), die Ausnehmungen (57) aufweisen, mit einem Scharnier des klappbaren Deckels (28) verbunden und am anderen Ende frei ist, und eine Auswurfscheibe (58) enthält, die mit der Rotationssymmetrieachse des Trägers (33) konzentrisch ist, auf einem Auswurfhebel (55) befestigt ist und an der Peripherie eine Anordnung von Ausnehmungen (61) hat, die zur Entnahme der Reaktionsbehälter (21) aus den Kammern (27) dienen, wobei die Drehachse (54) und der Steuerstift (63) in einer der Ausnehmungen (57) der Laschen (56) so eingreifen, dass bei einem bestimmten öffnungswinkel des klappbaren Deckels (28) der Steuerstift (63) in Kontakt mit einer Steuerfläche (64) der Ausnehmung (57) gerät und ein Verschwenken des Auswurfhebels (55) bewirkt.

## Claims

1. A device for automatic performance of polymerase chain reactions in a number of test tubes, each test tube being closed by a lid and containing a predetermined volume of a liquid reaction mixture, the device containing the following components:
(a) a holder (33) having an arrangement of chambers (27) for holding the test tubes (21), each chamber being adapted to receive the lower part of a test tube, said holder (33) consisting of a material which has a high thermal conductivity and having an upper surface, a bottom surface, and a cylindrical outer wall, each of the chambers (27) of the holder (33) having an opening located in the upper surface of the holder,
(b) test tubes (21) disposed in the chambers (27) of the holder (33) and each closed by a lid (87),
(c) a computer-controlled automatic control system, and
(d) means controlled by the automatic control system for cyclic alteration of the temperature of the holder,
which device is **characterised in that**
(i) the arrangement of the chambers (27) in the holder (33) is annular,
(ii) it comprises a hinged lid (28) for securing the closed test tubes (21) disposed in the holder, said lid having a pivot (54) and a control pin (63) disposed at a distance from the longitudinal axis of the pivot (54), and
(iii) it contains a lifting-out device for facilitating removal of the test tubes (21) from the chambers (27) in the holder (33), said lifting-out device comprising an ejection lever (55) having the recesses (57) at one end above lugs (56), is connected to a hinge of the hinged lid (28) and at the other end is free, and an ejection disc (58) which is concentric with the rotational axis of symmetry of the holder (33), is fixed on an ejection lever (55) and has at the periphery an arrangement of recesses (61) serving for removal of the test tubes (21) from the chambers (27), the pivot (54) and the control pin (63) so engaging in one of the recesses (57) of the lugs (56) that at a specific opening angle of the hinged lid (28) the control pin (63) comes into contact with a control surface of the recess (57) and causes pivoting of the ejection lever (55).

## Revendications

1. Dispositif pour la réalisation automatique de réactions en chaîne de la polymérase dans une pluralité de récipients de réaction, dans le cas duquel chaque récipient de réaction est obturé par un couvercle et contient un volume prédéterminé d'un mélange en réaction liquide, dispositif qui contient les composants suivants :
a) un support (33) qui présente une disposition de chambres (27) pour recevoir les récipients de réaction, chaque chambre convenant pour recevoir la partie inférieure d'un récipient de réaction et le support (33) étant constitué d'un matériau qui présente une conductivité thermique élevée et comportant une surface supérieure, une surface inférieure et une paroi extérieure cylindrique, chacune des chambres (27) du support (33) ayant une ouverture qui se situe dans la surface supérieure du support,
b) des récipients de réaction (21) qui sont disposés dans les chambres (27) du support (33) et dont chacun est obturé par un couvercle (87), et
c) un mécanisme de commande et de régulation commandé par ordinateur, et
d) des moyens, commandés par le mécanisme de commande et de régulation, pour la modification cyclique de la température du support,
dispositif qui se **caractérise par** le fait,
(i) que la disposition des chambres (27) dans le support (33) est annulaire,
(ii) qu'il contient un couvercle rabattable (28) pour fixer les récipients de réaction (21), obturés, disposés dans le support (33), ce couvercle présentant un axe de rotation (54) et une broche de commande (63) qui est disposée à une certaine distance de l'axe géométrique longitudinal de l'axe de rotation (54, et
(iii) qu'il contient dans le support (33) un mécanisme de soulèvement pour faciliter l'extraction des récipients de réaction (21) hors des chambres (27), mécanisme de soulèvement qui contient un levier éjecteur (55) qui, à une première extrémité, est relié, par l'intermédiaire de pattes (56) présentant des évidements (57), à une charnière du couvercle rabattable (28) et, à l'autre extrémité, est libre et contient un disque éjecteur (58) qui est concentrique à l'axo de symétrie de rotation du support (33), est fixé sur un levier éjecteur (55) et présente à sa périphérie une disposition d'évidements (61) qui servent à extraire les récipients de réaction (21) hors des chambres (27), l'axe de rotation (54) et la broche de commande (63) engrenant dans l'un des évidements (57) des pattes (56) de façon telle que, pour un angle d'ouverture déterminé du couvercle rabattable (28), la broche de commande (63) vient en contact avec une surface de commande (64) de l'évidement (57) et opère un pivotement du levier éjecteur (55).
